# EUROPÄISCHE PATENTSCHRIFT

(11) **EP 1 022 462 B1**
(45) Veröffentlichungstag und Bekanntmachung des Hinweises auf die Patenterteilung: **22.09.2004**
(21) Anmeldenummer: 00100829.1
(22) Anmeldetag: 17.01.2000
(51) Int. Cl.: F04B 1/20, F04B 1/12, F16J 15/00

(54) **Hydraulische Maschine, insbesondere Kolbenmaschine, mit einem Gehäuse und einer darin angeordneten Trennwand**
Hydraulic machine, especially piston machine, provided with a partitioning wall in the housing
Machine hydraulique, notamment machine à piston, comportant un carter dans lequel est disposé une cloison de séparation

(30) Priorität: 22.01.1999 DE 19902518
(43) Veröffentlichungstag der Anmeldung: 26.07.2000
(73) Patentinhaber: Brueninghaus Hydromatik GmbH, 89275 Elchingen (DE)
(72) Erfinder: Beck, Josef, 72401 Haigerloch 2 (DE)
(74) Vertreter: Körfer, Thomas, Dipl.-Phys.

(56) Entgegenhaltungen:
- EP-A- 0 480 694
- DE-A- 2 842 694
- DE-A- 19 613 609
- US-A- 3 771 799
- US-A- 3 811 798
- US-A- 3 893 375

## Beschreibung

Die Erfindung bezieht sich auf eine hydraulische Maschine nach dem Oberbegriff des Anspruchs 1.

Eine hydraulische Maschine dieser Art ist in der DE 196 13 609 A1 beschrieben. Bei dieser bekannten hydraulischen Maschine handelt es sich um eine Axialkolbenmaschine mit einer Welle, die mittels eines Wälzlagers in einer Gehäusewand des Gehäuses der hydraulischen Maschine gelagert und mittels eines außenseitig vom Wälzlager in einer Ringfuge zwischen der Welle und der Gehäusewand angeordneten Dichtringes abgedichtet ist. Bei dieser bekannten hydraulischen Maschine ist außerdem eine Pumpeneinrichtung für eine interne Zwangsspülung des Wälzlagers vorgesehen. Die Pumpeneinrichtung weist eine an der Innenseite des Wälzlagers angeordnete Förderscheibe auf, die dem Ringspalt des Wälzlagers axial gegenüberliegend Durchgangslöcher aufweist, die sich bezüglich der Drehachse der Welle in Richtung auf das Wälzlager divergent erstrecken. Hierdurch wirkt die Förderscheibe, die im Funktionsbetrieb sich wenigstens teilweise im hydraulischen Betriebs-Fluid, z. B. Schmieröl, befindet, wie ein Fliehkraft-Förderring, der das in den sich divergent erstreckenden Durchgangslöchern befindliche Fluid aufgrund der Fliehkraft in Richtung auf das Wälzlager fördert. Auf der der Förderscheibe abgewandten Seite des Wälzlagers ist ein Rückführungskanal vorgesehen, der sich in den Innenraum des Gehäuses zurück erstreckt, wobei das geförderte Schmieröl in den Innenraum zurückströmen kann.

Bei dieser bekannten Axialkolbenmaschine erstreckt sich die Strömung der Zwangsspülung vom äußeren Ringspalt des Wälzlagers durch radial nach außen gerichtete Kanäle von einem Ringraum etwa radial nach außen, wobei das geförderte Spülfluid den Ringraum quer durchströmt.

Der Innenrand des Dichtrings und die Mantelfläche der Welle bilden eine ringförmige Ecke, in deren Bereich aufgrund mangelnder Strömung kaum ein Austausch des hydraulischen Fluids stattfindet und deshalb sich in diesem Eckenbereich Festkörperverschmutzungen anhäufen. Die Folge davon ist eine Beeinträchtigung der Dichtfunktion des Dichtrings und frühzeitiger Verschleiß. Man spricht bei solchen strömungsarmen Bereichen von einem Totwassergebiet.

Bei einer hydraulischen Maschine der vorliegenden Art sind im Gehäuseinnenraum Maschinenteile angeordnet, die im Funktionsbetrieb durch in Gleit- oder Abwälzbewegungen miteinander in Kontakt stehen. Hierbei kann es sich z. B. um die Kolben einer Kolbenmaschine handeln, die in Kolbenbohrungen längs verschiebbar gelagert sind, oder es kann sich z. B. auch um die Wälzlagerteile des die Welle am Gehäuse lagernden Wälzlagers handeln. Diese Kontaktbeanspruchung von Maschinenteilen führt im Funktionsbetrieb zwangsläufig zu einem Abrieb im Bereich der Kontaktstellen, wodurch sich kleine Partikel bilden, die sich im hydraulischen Fluid verteilen und insbesondere an solchen Stellen im Gehäuseinnenraum ablagern können, die vom hydraulischen Fluid wenig oder gar nicht durchströmt werden.

Es ist festgestellt worden, daß bei den bekannten Maschinen im Funktionsbetrieb im Fluid enthaltene Partikel im Bereich der Dichtfläche des Dichtrings eingebettet werden und dadurch sowohl die Dichtfläche bzw. Dichtkante des Dichtrings als auch die damit zusammenwirkende Dichtfläche an der Welle beeinträchtigt werden können, und es dadurch zur Leckage kommt.

Der Erfindung liegt die Aufgabe zugrunde, bei einer hydraulischen Maschine der eingangs angegebenen Art deren Dichtring vor Beeinträchtigung seiner Dichtfunktion zu schützen.

Diese Aufgabe wird durch die Merkmale des Anspruchs 1 gelöst.

Bei der erfindungsgemäßen Ausgestaltung ist zwischen dem Dichtring und dem Wälzlager eine Trennwand angeordnet, die sich zwischen dem Gehäuse oder einem Anbauteil desselben, z. B. eine Hülse, und der Triebwelle oder einem Anbauteil derselben, z. B. ebenfalls eine Hülse, erstreckt und einen Hauptraum, in dem das Wälzlager angeordnet ist, von einem Nebenraum, der durch den Dichtring begrenzt und abgedichtet ist, trennt. Die Trennwand bildet eine Barriere, die in zweifacher Hinsicht vorteilhaft ist.

Zum einen bildet sie eine Barriere gegen Druckschwankungen, insbesondere plötzliche Druckerhöhungen wie Druckspitzen, im Hauptraum, so daß diese sich nicht in den Nebenraum fortpflanzen und den Dichtring vermehrt beanspruchen oder überbeanspruchen können. Dies gilt insbesondere für einen solchen Dichtring, der eine sich axial einwärts erstreckende ringförmige Dichtlippe aufweist, die bei einer Druckerhöhung gegen die Triebwelle gepreßt wird, wobei sich die Flächenpressung zwischen der Dichtlippe und der Triebwelle wesentlich vergrößert und zu einem vergrößerten Verschleiß der Dichtlippe führt.

Zum anderen bildet die Trennwand eine Barriere gegen im hydraulischen Fluid des Hauptraums enthaltene Feststoffverunreinigungen, insbesondere aus einem Abrieb resultierende Partikel, die somit weder in den Nebenraum gelangen können, noch die Dichtfläche am Dichtring beeinträchtigen können. Vorteilhafte Weiterbildungen der Erfindung sind in den Unteransprüchen beschrieben.

Die Drehbewegung der Triebwelle relativ zur Trennscheibe oder die Drehbewegung der Triebwelle mit der Trennscheibe relativ zum Gehäuse läßt sich durch eine Bewegungsfuge im Innenrandbereich und/oder Außenrandbereich der Trennscheibe gewährleisten. Dabei gewährleistet diese Bewegungsfuge nicht nur eine Drehbewegung sondern auch eine relative Axialbewegung bei der Montage bzw. Demontage der Maschine. Es ist im Rahmen der Erfindung möglich, die Trennscheibe fest am Gehäuse anzuordnen, wobei die Bewegungsfuge sich im Innenrandbereich der Trennscheibe befindet, oder fest auf der Triebwelle anzuordern, wobei die Bewegungsfuge sich im Außenrandbereich der Trennscheibe befindet.

Wenn die Trennwand nicht abgedichtet ist, kann durch die zwischen der Trennwand und dem Gehäuse oder der Trennwand und der Triebwelle bestehende Bewegungsfuge ein geringer Durchtritt des hydraulischen Fluids, z. B. im Rahmen einer Leckagemenge, erfolgen, so daß die Schmierung des Dichtrings mit dem hydraulischen Fluid gewährleistet ist, der Übergang von Feststoffverunreinigungen wie Partikeln vom Hauptraum in den Nebenraum jedoch verhindert oder zumindest vermindert ist. Dabei erfüllt die Bewegungsfuge die Funktion einer Drossel, die die im Hauptraum auftretenden Druckschwankungen, insbesondere Druckerhöhungen oder Druckspitzen auf einen unschädlichen Wert im Nebenraum reduziert und den Übergang der Verunreinigungen oder Partikel verhindert oder zumindest vermindert.

Durch die erfindungsgemäße Ausgestaltung werden somit die Gefahr einer Festkörperverschmutzung und/oder eine unsachgemäße Druckbeanspruchung des Dichtrings sowie eine daraus resultierende Beeinträchtigung der Abdichtung verhindert oder zumindest vermindert. Die Bewegungsfuge kann durch ein Bewegungsspiel am Außenrand und/oder Innenrand der Trennscheibe gebildet sein.

Des weiteren ist es vorteilhaft, einen Strömungskreislauf zwischen dem Hauptraum und dem Nebenraum vorzusehen, in dem eine Fördereinrichtung und ein Filter angeordnet sind. Dabei kann vorzugsweise in Strömungsrichtung hinter dem Filter eine Drossel zwecks einer Verzögerung des Druckausgleichs vorgesehen sein. Bei einer solchen Ausgestaltung ist zusätzlich ein Austausch des im Nebenraum befindlichen Fluids gewährleistet, wodurch die Schmierung und die Kühlung des Dichtrings verbessert wird.

Weitere, in den Unteransprüchen enthaltende Merkmale führen zu einfachen und kostengünstig herstellbaren Ausgestaltungen kleiner Bauweise und störungsfreier Funktion bei langer Lebensdauer.

Nachfolgend werden die Erfindung und weitere durch sie erzielbare Vorteile anhand von vorteilhaften Ausgestaltungen näher erläutert. Es zeigen:
- Fig. 1: eine erfindungsgemäße hydraulische Maschine in Form einer Axialkolbenmaschine, im axialen Schnitt;
- Fig. 2: die in Fig. 1 mit X gekennzeichneter Einzelheit in abgewandelter Ausgestaltung und vergrößerter Darstellung;
- Fig. 3: die Einzelheit nach Fig. 2 in weiter abgewandelter Ausgestaltung;
- Fig. 4: die Einzelheit nach Fig. 2 in weiter abgewandelter Ausgestaltung.

Die hydraulische Maschine 1 weist ein vorzugsweise zweiteiliges Gehäuse 2 auf, mit einem topfförmigen Gehäuseteil, daß durch eine Stirnwand 2a und eine Umfangswand 2b gebildet ist, und mit einem Deckel 2c, der am der Stirnwand 2a abgewandten Ende der Umfangswand 2b anliegt und somit einen wenigstens teilweise mit einem hydraulischen Fluid, insbesondere Hydrauliköl, gefüllten Gehäuseinnenraum 3 verschließt sowie mit der Umfangswand 2b lösbar verschraubt ist. Eine von mehreren, auf dem Umfang verteilt angeordneten Schrauben ist dargestellt und mit 4 bezeichnet. Eine den Gehäuseinnenraum 3 bezüglich der Umfangswand 2b axial durchsetzende Triebwelle 5 ist im Deckel 2c und in der Stirnwand 2a jeweils in wenigstens einem Wälzlager 6, 7 drehbar gelagert, wobei sie die Stirnwand 2a in einem Durchführungsloch 8 durchsetzt, das beim vorliegenden Ausführungsbeispiel durch eine Stufenbohrung gebildet ist, in deren inneren und größeren Bohrungsstufe 8a das Wälzlager 7 und in deren äußeren und kleineren Bohrungsstufe 8b ein Dichtring 9 jeweils passender Querschnittsgröße angeordnet ist. Im Gehäuseinnenraum 3 ist auf der Triebwelle 5 ein Zylinderblock 11 gelagert, der mehrere, auf dem Umfang verteilt angeordnete, etwa axial verlaufende Kolbenbohrungen 12 aufweist, in denen Kolben 13 längs verschiebbar gelagert sind, die den Zylinderblock 11 in Richtung auf die Stirnwand 2a überragen und mit diesen freien Kolbenenden an einer zwischen der Stirnwand 2a und dem Zylinderblock 11 angeordneten Schrägscheibe 14 gelenkig abgestützt sind. Bei der vorliegenden Ausgestaltung ist die Schrägscheibe 14 drehfest gelagert, wobei es sich um eine Axialkolbenmaschine wahlweise vergrößerbaren und verkleinerbaren Durchgangsvolumens handelt, bei der die Schrägscheibe 14 durch eine Schwenkscheibe 14a gebildet ist, die um eine quer zur Triebwelle 5 verlaufende Schwenkachse 15 an zylinderabschnittförmigen Gleitflächen 16 an der Innenseite der Stirnwand 2a schwenkbar gelagert ist, wobei die Kolben 13 sich mittels Gleitschuhen 17 an einer ihnen zugewandten schrägen Gleitfläche 18 abstützen.

Am dem der Schrägscheibe 14 abgewandten Ende des Gehäuseinnenraums 3 liegt der Zylinderblock 11 an einer Steuerscheibe 19 an, die an der Innenseite des Deckels 2c abgestützt ist und einander radial gegenüberliegende Steuernieren 21 aufweist, die in an sich bekannter Weise den Durchgang eines Einlaß- und Auslaßkanals 22, 23 im Deckel 2c zu jeweils zugehörigen hydraulischen Arbeitskammern 24 in den Kolbenbohrungen 12 steuern.

Zum Einstellen eines gewünschten Durchgangsvolumens der Maschine 1 ist eine nicht dargestellte Verstellvorrichtung vorgesehen, mit der die Schrägscheibe 14 verstellbar und in der jeweils eingestellten Position feststellbar ist.

Bei dem Dichtring 9 handelt es sich vorzugsweise um einen Lippenring mit einer sich von einem Basiskörper 9a axial oder schräg nach innen erstreckenden Dichtlippe 9b. Zur Sicherung des Dichtrings 9 gegen ein axiales Wandern nach außen ist ein lösbarer Sicherungsring 25 vorgesehen, der in einer Ringnut in der Wandung der Bohrungsstufe 8b sitzt. Der am Sicherungsring 25 anliegende Dichtring 9 schließt innen in etwa mit der radialen Stufenfläche 8c des Durchführungslochs 8 ab. Der Basiskörper 9a des Dichtrings 9 ist vorzugsweise topfförmig geformt mit einem radialen Scheibenkörper 9c, von dessen Innenrand sich die Dichtlippe 9b nach innen erstreckt, und von dessen Außenrand sich eine Umfangswand 9d nach innen erstreckt. Der Dichtlippe 9b gegenüberliegend kann eine Schutzlippe 9e angeordnet sein. Das Wälzlager 7 ist z. B. mittels eines Ringansatzes an der Triebwelle 5 so axial positioniert, daß sein Innen- und/oder der Außenring 7a, 7b einen axialen Abstand a vom Dichtring 9 und von der Stufenfläche 8c von einigen Millimetern aufweist. Der Dichtring 9 besteht aus Kunststoff, wobei sein Basiskörper 9a durch einen festen Kern 9f stabilisiert sein kann.

Zwischen dem Dichtring 9 und dem Wälzlager 7 ist eine sich zwischen der Triebwelle 5 oder Anbauteilen derselben und dem Gehäuse 2 oder Anbauteilen desselben erstreckende Trennwand 26 angeordnet, die den vorhandenen Gehäuseinnenraum 3 in einen das Wälzlager 7 enthaltenden Hauptraum 3a und einen Nebenraum 3b unterteilt, der vom Dichtring 9 axial begrenzt und abgedichtet ist. Die die Triebwelle 5 ringförmig umgebende Trennwand 26 weist z. B. die Form einer radialen Scheibe auf, und sie kann mit ihrem Außenumfangsrand 26a so groß bemessen sein, daß sie fest in der Bohrungsstufe 8a sitzt und deren Innenumfangswand 26b berührt, wobei der Innenumfangsrand unter Berücksichtigung eines Bewegungsspiels einen kleinen radialen Abstand vom Umfang der Triebwelle 5 aufweist. Alternativ kann die Trennwand 26 mit ihrem Innenumfangsrand 26b fest auf der Triebwelle 5 sitzen, wobei ihr Außenumfangsrand 26a sich unter Berücksichtigung eines Bewegungsspiels bis zum Gehäuse 2, hier bis zur Stirnwand 2a, insbesondere bis zur Innenwand der Bohrungsstufe 8a erstreckt. Hierdurch ergibt sich im Bereich des äußeren oder beim vorliegenden Ausführungsbeispiel inneren Sitzes der Trennwand 26 eine Sitzfuge 26c, während am gegenüberliegenden Rand der Trennwand, hier am Außenumfangsrand 26a eine Bewegungsfuge 26d, z. B. eine Gleitfuge, vorhanden ist, die aufgrund des vorhandenen Bewegungsspiels für das Fluid durchlässig ist. Dabei bildet die Bewegungsfuge 26d gegebenenfalls mit der Sitzfuge 26c, die kaum dicht auszubilden ist, eine Drossel 27 zwischen dem Haupt- und Nebenraum 3a, 3b, deren Querschnittsgröße von der Größe des Bewegungsspiels abhängig ist.

Die Trennwand 26 trennt den Gehäuseinnenraum 3 in den Hauptraum 3a und den Nebenraum 3b, wobei die Drossel 27 bei einem plötzlichen Druckanstieg im Hauptraum 3a zu einem verzögerten Druckausgleich zwischen dem Hauptraum 3a und dem Nebenraum 3b führt. Aufgrund der geringen Querschnittsgröße der Drossel 27 werden dagegen Festkörperverschmutzungen in Form von kleinen Partikeln, insbesondere Abrieb von den vorhandenen Führungsflächen, z. B. vom Wälzlager 7, durch die Trennwand 26 im Hauptraum 3a zurückgehalten, und sie können nicht mit dem durch die Bewegungsfuge 26d bzw. Drossel 27 durchsickernden Fluid in den Nebenraum 3b gelangen. Zumindest wird durch die Drossel 27 die Durchgangsmenge der Festkörperpartikel vermindert. Hierdurch wird der Dichtring 9 vor den Verunreinigungspartikeln weitgehend geschützt, so daß diese nicht zwischen die Dichtlippe 9b und die zugehörige Gleitfläche der Triebwelle 5 gelangen und sich dort weder ablagern noch in die Dichtlippe 9b eingepreßt werden können, wodurch die Dichtungsfunktion der Dichtlippe 9b unbeeinträchtigt bleibt.

Es ist zu berücksichtigen, daß die vorteilhafte Wirksamkeit der Trennwand 26 auf zwei voneinander unabhängigen Wirkungen beruht, die jeweils für sich allein von Vorteil sind und sich besonders vorteilhaft ergänzen.

Zum einen führt die Trennwand 26 zu einem verzögerten Druckausgleich zwischen dem Hauptraum 3a und dem Nebenraum 3b, wodurch plötzlich auftretende Druckerhöhungen und Druckspitzen in ihrer auf den Nebenraum 3b einwirkenden Wirkungsweise gedämpft und abgebaut werden, wodurch der Dichtring 9 und insbesondere dessen Dichtlippe 9b weniger beansprucht wird. Deshalb ist auch die Gefahr verringert, daß eventuell vorhandene Partikel zwischen der Dichtlippe 9b und der Triebwelle 5 in die Dichtlippe 9b eingearbeitet bzw. eingepreßt werden.

Zum anderen werden die Partikel an der Bewegungsfuge 26d oder Drossel 27 zurückgehalten, so daß diese nicht oder nur in verminderter bzw. vernachlässigbarer Menge in den Nebenraum 3b und somit auch zur Dichtlippe 9b gelangen. Unter diesem Gesichtspunkt sind auf Druckschwankungen beruhende Pressungen der Dichtlippe gegen die Triebwelle 5 weniger schädlich, da es mangels Partikeln zwischen der Dichtlippe 9b und der Triebwelle 5 zu keiner oder verminderter bzw. vernachlässigbarer Einpressung von Partikeln in die Dichtlippe 9b kommt.

Die vorerwähnten Druckerhöhungen oder Druckspitzen sind im Funktionsbetrieb von hydraulischen Maschinen 1, hier von Kolben bzw. Axialkolbenmaschinen, kaum vermeidbar. Sie können sowohl durch unterschiedlich große Versorgungsdrucke als auch durch im Gehäuseinnenraum 3 verursachte Druckerhöhungen bedingt sein. Letztere können z. B. dann auftreten, wenn die Schwenkscheibe 14 plötzlich zwischen ihrer minimalen und maximalen Verstellposition verstellt wird.

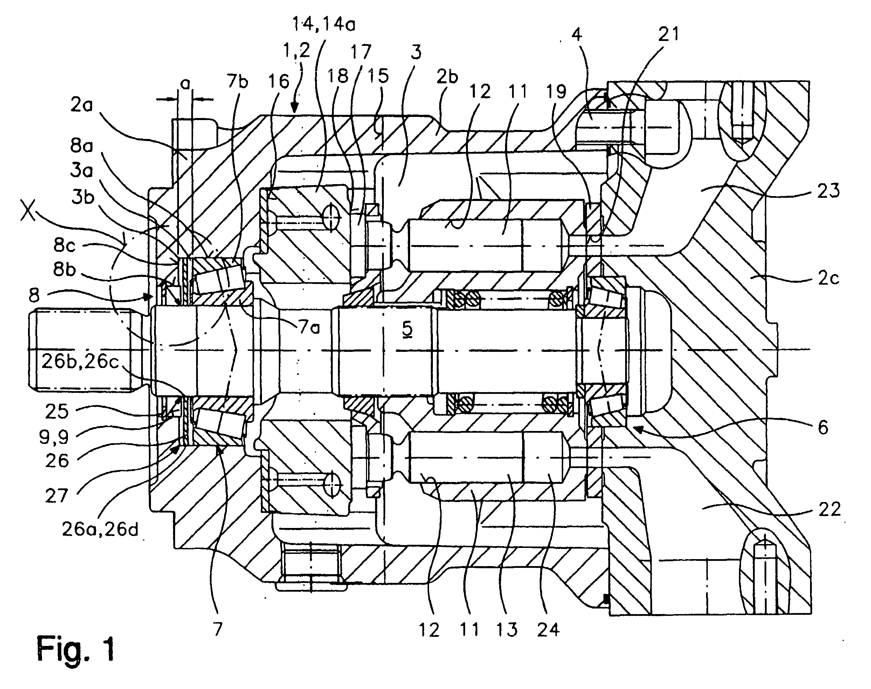

Das Ausführungsbeispiel nach Fig. 1 zeigt eine prinzipielle Anordnung der Trennwand 26, wobei deren axiale Sicherung durch einen Preßsitz im Bereich ihrer Sitzfuge 26c am Außenoder Innenumfangsrand 26a, 26b gewährleistet sein kann.

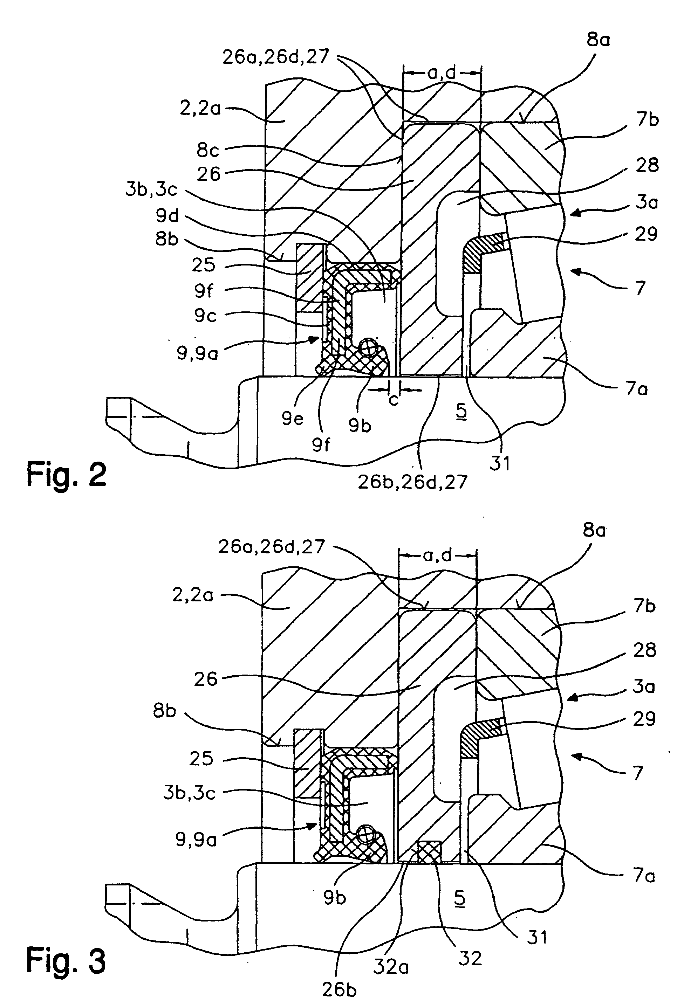

Bei den folgenden Ausführungsbeispielen ist die Trennwand 26 bei Ausnutzung ihrer Dicke d so angeordnet und ausgebildet, daß sie axiale Stützfunktionen für das Wälzlager 7 und/oder für den Dichtring 9 erfüllen kann. Dabei kann die Dicke d der Trennwand 26 dem axialen Abstand a des Innenrings 7a oder Außenring 7b des Wälzlagers 7 von der Stufenfläche 8c oder vom Dichtring 9 entsprechen, so daß die Trennwand 26 an der Stufenfläche 8c oder am Dichtring 9 anliegen kann. Bei einer solchen Ausgestaltung kann sich die Bewegungsfuge 26d oder Drossel 27 nicht nur im Bereich des Außenumfangsrandes 26a sondern auch im Bereich zwischen der radialen Stützfläche der Trennwand 26 und der Stufenfläche 8c im Sinne einer Gleitfuge oder Anlagefuge befinden. Bei einer solchen axialen Fixierung der Trennwand 26 kann sich eine Bewegungsfuge 26d auch am Innenumfangsrand 26b und/oder am Außenumfangsrand 26a befinden, wie es Fig. 2 zeigt, bei der der Dichtring 9, die Trennwand 26 und der Außenring 7b axial aneinanderliegend angeordnet und somit axial gegeneinander gesichert bzw. positioniert sind. Bei dieser Ausgestaltung ist eine an der dem Wälzlager 7 zugewandten Seite der Trennwand 26 angeordnete Ringausnehmung 28 vorhanden, die einen axial vorstehenden Käfig 29 des Wälzlagers 7 aufnimmt. Außerdem ist bei diesem Ausführungsbeispiel der Innenring 7a axial größer bemessen, als der Außenring 7b, so daß er letzteren axial nach außen überragt. In einem solchen Fall kann die Trennwand 26 im Bereich des Innenrings 7a dünner bemessen sein, als an ihrem Außenumfangsrand 26a, so daß sich eine Verjüngung oder Ausnehmung 31 ergibt, in die der Innenring 7a vorzugsweise mit axialem Bewegungsspiel hineinragen kann.

Beim Ausführungsbeispiel nach Fig. 3, bei dem gleiche oder vergleichbare Teile ebenfalls mit gleichen Bezugszeichen versehen sind, ist der Innenumfangsrand 26a der Trennwand 26 durch einen Dichtring 32 zur Triebwelle 5 hin abgedichtet, der in einer Ringnut 32a in der Trennwand 2c sitzt. Bei dieser Ausgestaltung kann eine Drossel 27 allenfalls am Außenumfangsrand 26a im Bereich der Bohrungsstufe 8a vorhanden sein.

Insbesondere dann, wenn die Trennwand 26 mit einer Spannung an der Stufenfläche 8c anliegt, kann vom Vorhandensein einer Drossel 27 an dieser radialen Anlagefläche kaum eine Rede sein, so daß bei einer solchen Ausgestaltung die Trennwand 26 den Nebenraum 3b vom Hauptraum 3a hermetisch trennt. Die Schmierung der dabei vom hydraulischen Fluid getrennten Dichtlippe 9b kann durch eine Einmalversorgung bei der Montage gewährleistet sein, z. B. dadurch, daß ein Schmierfluid oder Fett bei der Montage in den Nebenraum 3b eingegeben wird.

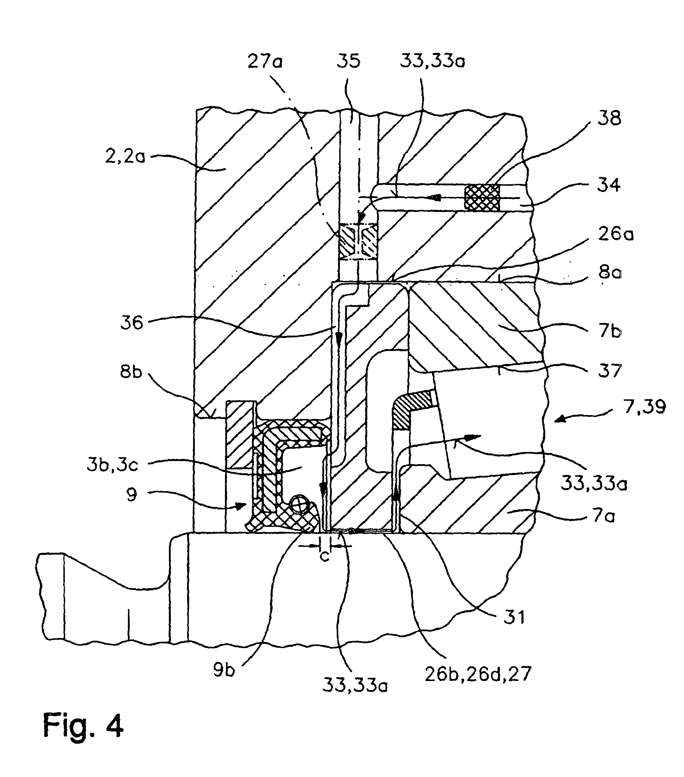

Beim Ausführungsbeispiel nach Fig. 4, bei dem gleiche oder vergleichbare Teile ebenfalls mit gleichen Bezugszeichen versehen sind, ist sowohl die Trennwand 26 als auch ein besonderer, die Trennwand 26 passierender Umwälzkreislauf 33 für einen den Nebenraum 3b durchströmenden Fluidstrom 33a vorgesehen, der z. B. von einer Druckleitung der Maschine 1 oder vom Hauptraum 3a ausgehen kann und z. B. in den Hauptraum 3a münden kann. Die Strömung im Umwälzkreislauf 33 kann durch eine Fördereinrichtung erzeugt werden, die vorzugsweise durch vorhandene, noch zu beschreibende Bauteile gebildet ist.

Wie Fig. 4 zeigt, weist der Umwälzkreislauf 33 axiale und radiale Kanäle 34, 35 auf, die sich vom Hauptraum 3a in der Stirnwand 2a zur Bohrungsstufe 8a und/oder 8b hin erstrecken. Durch wenigstens einen, sich am Außenumfangsrand 26a und/oder an der dem Wälzlager 7 abgewandten Seite der Trennwand 26 erstreckenden radialen Kanal 36, der sich bis in dem zum Nebenraum 3b gehörenden Freiraum 3c des Dichtringes 9 erstreckt, und die Bewegungsfuge 26d am Innenumfangsrand 26b, die die Drossel 27 bildet, und ferner durch die Ausnehmung 31 und den zwischen dem Innenring 7a und dem Außenring 7b gebildeten axialen Spalt 37 ist der Nebenraum 3b an den Umwälzkreislauf 33 angeschlossen. Dabei kann in einem zuführenden Kanal, hier in den Kanälen 34, 35 eine Drossel 27a und/oder ein Filter 38 angeordnet sein, zwecks verzögertem Druckausgleich durch den Umwälzkreislauf 33 und/oder zwecks Zurückhaltung von Partikeln. Die vorzugsweise vorhandene Drossel 27a und/oder das vorzugsweise vorhandene Filter 38, z. B. in Form einer Filterpatrone, sind in Fig. 4 nur andeutungsweise dargestellt. Es ist zwecks Vermeidung von Verstopfungen der Drossel 27a durch Partikel vorteilhaft, in dem zuführenden Strömungsleitungsabschnitt in der Strömungsrichtung erst den Filter 38 und dann die Drossel 27a anzuordnen.

Die vorerwähnte, dem Umwälzkreislauf 33 zugeordnete Fördereinrichtung 39 ist beim vorliegenden Ausführungsbeispiel durch das vorhandene Wälzlager 7 gebildet, dessen sich axial nach innen divergent erstreckender Ringspalt 37 die im Funktionsbetrieb selbsttätig wirksame Fördereinrichtung 39 bildet. Diese Funktion beruht auf der Fliehkraft, die im Funktionsbetrieb der Maschine 1 auf das sich in dem Ringspalt 37 befindliche Fluid wirkt und aufgrund der nach innen schrägen bzw. divergenten Anordnung die nach innen und schräg nach außen gerichtete Strömung gemäß Pfeil 33a bewirkt. Diese Strömung erzeugt aufgrund von Saugwirkung den kontinuierlich strömenden Umwälzkreislauf 33.

Aufgrund der vorbeschriebenen erfindungsgemäßen Anordnung der Trennwand 26, die sich mit ihrer inneren Außenecke in einem geringen Abstand c von vorzugsweise etwa 1-2 mm von der Dichtlippe 9b befindet, wird die Strömung im Umwälzkreislauf 33 direkt an der Dichtlippe 9b vorbeigeführt, wodurch verhindert wird, daß sich eventuell im Fluid enthaltene Partikel im Bereich der Dichtlippe 9b absetzen.

## Patentansprüche

1. Hydraulische Maschine (1), insbesondere Kolbenmaschine, mit einem Gehäuse (2), in dem eine Triebwelle (5) drehbar gelagert ist, die eine Gehäusewand (2a) in einer Stufenbohrung mit einer großen Bohrungsstufe (8a) und einer kleinen Bohrungsstufe (8b) durchsetzt und durch ein in der großen Bohrungsstufe (8a) sitzendes Wälzlager (7) an der Gehäusewand (2a) gelagert sowie durch einen axial außenseitig vom Wälzlager (7) im Bereich der kleinen Bohrungsstufe (8b) angeordneten Dichtring (9) abgedichtet ist,
wobei zwischen dem Dichtring (9) und dem Wälzlager (7) eine Trennwand (26) angeordnet ist, die sich zwischen dem Gehäuse (2) oder einem Anbauteil desselben und der Triebwelle (5) oder einem Anbauteil derselben erstreckt und das Wälzlager (7) von dem Dichtring (9) trennt,
**dadurch gekennzeichnet,**
**daß** der Dichtring (9) eine sich axial einwärts erstreckende ringförmige Dichtlippe (9b) aufweist und in der kleinen Bohrungsstufe (8b) sitzt,
**daß** die Trennwand (26) durch eine Trennscheibe gebildet ist, die mit Ihrer dem Wälzlager (7) abgewandten Seite an einer Stufenfläche (8c) der Stufenbohrung anliegt und den Dichtring (9) und/oder einen Innenring (7a) oder einen Außenring (7b) des Wälzlagers (7) axial stützt, und
**daß** die Trennscheibe fest auf der Triebwelle (5) sitzt, an ihrem Außenumfangsrand (26a) mit einem Bewegungsspiel zur großen Bohrungsstufe (8a) angeordnet ist oder fest in der großen Bohrungsstufe (8a) eingesetzt ist, an ihrem Innenumfangsrand (26b) mit einem Bewegungsspiel zur Triebwelle (5) angeordnet ist und eine Barriere gegen aus einem Abtrieb resultierende Partikel bildet.

2. Hydraulische Maschine nach Anspruch 1,
**dadurch gekennzeichnet,**
**daß** die Trennscheibe an ihrem Innenumfangsrand (26b) oder ihrem Außenumfangsrand (26a) durch einen Dichtring (32) abgedichtet ist.

3. Hydraulische Maschine nach einem der vorherigen Ansprüche,
**dadurch gekennzeichnet,**
**daß** ein Nebenraum (3b) zwischen der Trennscheibe und dem Dichtring (9) an einen Umwälzkreislauf (33) für hydraulisches Fluid der Maschine (1) angeschlossen ist.

4. Hydraulische Maschine nach Anspruch 3,
**dadurch gekennzeichnet,**
**daß** der Umwälzkreislauf (33) in einen Hauptraum (3a) zwischen der Trennscheibe und dem Wälzlager (7) mündet, vorzugsweise durch eine Bewegungsfuge (26d) der Trennscheibe (26).

5. Hydraulische Maschine nach Anspruch 3 oder 4,
**dadurch gekennzeichnet,**
**daß** dem Umwälzkreislauf (33) eine Fördereinrichtung (39) zum Erzeugen einer Kreislaufströmung zugeordnet ist.

6. Hydraulische Maschine nach Anspruch 5,
**dadurch gekennzeichnet,**
**daß** der Umwälzkreislauf (33) wenigstens einen Kanal (34, 35) in der Gehäusewand (2a) und vorzugsweise einen damit verbundenen radialen Kanal (36) in der dem Dichtring (9) zugewandten Seite der Trennscheibe aufweist.

7. Hydraulische Maschine nach Anspruch 5 oder 6,
**dadurch gekennzeichnet,**
**daß** die Fördereinrichtung (39) durch das Wälzlager (7) gebildet ist, das zwischen seinem Innen- und Außenring (7a, 7b) einen in der Strömungsrichtung (33, 33a) divergenten Spalt (37) aufweist.

8. Hydraulische Maschine nach einem der vorherigen Ansprüche 3 bis 7,
**dadurch gekennzeichnet,**
**daß** in einem zuführenden Kanalabschnitt des Umwälzkreislaufs (33), vorzugsweise in einem in der Gehäusewand (2a) verlaufenden Kanalabschnitt (34, 35), ein Filter (38) und/oder eine Drossel (27a) angeordnet ist bzw. sind.

## Claims

1. Hydraulic machine (1), in particular a reciprocating machine, with a housing (2), in which a driving shaft (5) is rotatably mounted, which passes through a housing wall (2a) in a stepped port with a large port step (8a) and a small port step (8b) and is mounted on the housing wall (2a) by a roller bearing (7) located in the large port step (8a) as well as sealed by a sealing ring (9) arranged axially outside the roller bearing (7) in the vicinity of the small port step (8b), whereby a partition (26), extending between the housing (2) or an attachment of the same and the driving shaft (5) or an attachment of the same and separating the roller bearing (7) from the sealing ring (9), is arranged between the sealing ring (9) and the roller bearing (7), **characterised in that** the sealing ring (9) has a circular sealing rim (9b) extending axially inwards and sits in the small port step (8b), **in that** the partition (26) is formed by a separating plate, which with its side facing away from the roller bearing (7) lies against a stepped surface (8c) of the stepped port and axially supports the sealing ring (9) and/or an inner collar (7a) or outer collar (7b) of the roller bearing (7), and **in that** the separating plate sits firmly on the driving shaft (5), is arranged on its outer circumferential edge (26a) with movement play towards the large port step (8a) or is firmly inserted in the large port step (8a), is arranged on its inner circumferential edge (26b) with movement play towards the driving shaft (5) and forms a barrier against particles resulting from abrasion.

2. Hydraulic machine according to Claim 1, **characterised in that** the separating plate is sealed on its inner circumferential edge (26b) or on its outer circumferential edge (26a) by a sealing ring (32).

3. Hydraulic machine according to any one of the previous claims, **characterised in that** a secondary area (3b) between the separating plate and the sealing ring (9) is connected to a circulating loop (33) for hydraulic fluid of the machine (1).

4. Hydraulic machine according to Claim 3, **characterised in that** the circulating loop (33) flows into a main area (3a) between the separating plate and the roller bearing (7), preferably through a movement gap (26d) of the separating plate (26).

5. Hydraulic machine according to Claim 3 or 4, **characterised in that** a feed system (39) is assigned to the circulating loop (33) for producing a circulating flow.

6. Hydraulic machine according to Claim 5, **characterised in that** the circulating loop (33) has at least one duct (34, 35) in the housing wall (2a) and preferably an associated radial duct (36) in the side of the separating plate facing the sealing ring (9).

7. Hydraulic machine according to Claim 5 or 6, **characterised in that** the feed system (39) is formed by the roller bearing (7), which has a gap (37) divergent in the direction of flow (33, 33a) between its inner and outer collar (7a, 7b).

8. Hydraulic machine according to any one of the previous claims 3 to 7, **characterised in that** a filter (38) and/or a choke (27a) are/is arranged in a duct section supplying the circulating loop (33), preferably in a duct section (34, 35) running in the housing wall (2a).

## Revendications

1. Machine hydraulique (1), en particulier machine à piston, comportant un carter (2) dans lequel un arbre de commande (5) est disposé de manière à faire tourner, qui traverse une paroi du carter (2a) dans un alésage étagé comportant un grand étage d'alésage (8a) et un petit étage d'alésage (8b)? et qui est positionné contre la paroi du carter (2a) grâce à un roulement (7) situé dans le grand étage d'alésage (8a) et qui est fermé hermétiquement par une bague d'étanchéité (9) disposée axialement à l'extérieur du roulement (7) au niveau du petit étage d'alésage (8b),
une paroi de séparation (26) étant disposée entre la bague d'étanchéité (9) et le roulement (7), qui s'étend entre le carter (2) ou un élément rapporté de celui-ci et l'arbre d'entraînement (5) ou un élément rapporté de celui-ci et sépare le roulement (7) de la bague d'étanchéité (9)
**caractérisée en ce que**
la bague d'étanchéité (9) présente une lèvre d'étanchéité (9b) annulaire s'étendant axialement vers l'intérieur et se trouve sur le petit étage d'alésage (8b),
**en ce que** la paroi de séparation (26) est formée par un disque de séparation qui plaque, avec son côté opposé au roulement (7), contre une face d'étage (8c) de l'alésage étagé et soutient axialement la bague d'étanchéité (9) et/ou une bague intérieure (7a) ou une bague extérieure (7b) du roulement (7) et
**en ce que** le disque de séparation repose fixement sur l'arbre de commande (5), est disposé sur son bord périphérique extérieur (26a) avec un jeu de mouvement par rapport au grand étage (8a) de l'alésage ou est inséré fixement dans le grand étage (8a) de l'alésage, est disposé sur son bord périphérique intérieur (26b) avec un. jeu de mouvement par rapport à l'arbre de commande (5) et forme une barrière contre des particules résultant d'une friction.

2. Machine hydraulique selon la revendication 1,
**caractérisée en ce que**
le disque de séparation est fermé hermétiquement par une bague d'étanchéité (32) sur son bord périphérique intérieur (26b) ou son bord périphérique extérieur (26a).

3. Machine hydraulique selon l'une quelconque de revendications précédentes,
**caractérisée en ce que**
une chambre annexe (3b) entre le disque de séparation et la bague d'étanchéité (9) raccorde un circuit de circulation (33) pour un fluide hydraulique de la machine (1).

4. Machine hydraulique selon la revendication 3,
**caractérisée en ce que**
le circuit de circulation (33) débouche dans une chambre principale (3a) entre le disque de séparation et le roulement (7), de préférence par un joint de mouvement (26d) du disque de séparation (26).

5. Machine hydraulique selon la revendication 3 ou 4,
**caractérisée en ce que**
au circuit de circulation (33) est associé un dispositif d'acheminement (39) pour générer un courant circulaire.

6. Machine hydraulique selon la revendication 5,
**caractérisée en ce que**
le circuit de circulation (33) présente au moins un canal (34, 35) dans la paroi du carter (2a) et, de préférence, un canal radial (36) qui est relié avec lui dans le côté du disque de séparation dirigé vers la bague d'étanchéité (9).

7. Machine hydraulique selon la revendication 5 ou 6,
**caractérisée en ce que**
le dispositif d'acheminement (39) est formé par le roulement (7) qui présente, entre sa bague intérieure et sa bague extérieure (7a, 7b) une fente (37) divergente dans le sens d'écoulement (33, 33a).

8. Machine hydraulique selon l'une quelconque de revendications précédentes 3 à 7,
**caractérisée en ce que**
dans un tronçon de canal d'amenée du circuit de circulation (33), de préférence dans un tronçon de canal (34, 35) passant dans la paroi du carter (2a), est ou sont disposé(s) un filtre (38) et/ou un organe d'étranglement (27a).
